# EUROPEAN PATENT SPECIFICATION

(11) **EP 3 860 059 B1**
(45) Date of publication and mention of the grant of the patent: **05.06.2024**
(21) Application number: 19867439.2
(22) Date of filing: 23.09.2019
(51) Int. Cl.: H04L 45/64, H04L 45/12, H04L 45/00, H04L 45/02

(54) **ROUTING PATH CALCULATION METHOD, DEVICE, AND COMPUTER-READABLE STORAGE MEDIUM**
VERFAHREN, VORRICHTUNG ZUR BERECHNUNG EINES ROUTING-PFADES UND COMPUTERLESBARES SPEICHERMEDIUM
PROCÉDÉ, DISPOSITIF DE CALCUL DE CHEMIN DE ROUTAGE, ET SUPPORT DE STOCKAGE LISIBLE PAR ORDINATEUR

(30) Priority: 29.09.2018 CN 201811152235
(43) Date of publication of application: 04.08.2021
(73) Proprietor: ZTE Corporation, Shenzhen, Guangdong 518057 (CN)
(72) Inventor: ZHU, Peng, Shenzhen, Guangdong 518057 (CN)
(74) Representative: Pennacchio, Salvatore Giovanni
(86) International application number: PCT/CN2019/107367
(87) International publication number: WO 2020/063549

(56) References cited:
- CN-A- 101 883 293
- CN-A- 102 156 756
- CN-A- 104 601 473
- US-A1- 2003 043 756
- US-A1- 2012 093 030
- US-A1- 2015 256 442

## Description

### Technical Field

The present disclosure relates to the technical field of communication, and particularly to a routing path calculation method, system and device, and a computer-readable storage medium.

### Background

With the constant development of an Automatically Switched Optical Network (ASON) technology and a Software Defined Network (SDN), more and more service providers have started adopting optical network devices for networking, and have implemented automatic path calculation and connection establishment for calls in a control layer to realize planning and calculation functions for entire call paths.

In path calculation, a K-optimal path may usually be provided for wavelength allocation to increase the probability that wavelength allocation succeeds. At present, most K-optimal path algorithms are implemented based on a dijsktra algorithm. When an input condition of a K-optimal path algorithm is that multiple links and nodes are required to be passed, a piecewise path calculation method is usually adopted, and then paths that are calculated piecewise are spliced into complete K paths. In the piecewise path calculation algorithm, when the piecewise paths are spliced, it is usually necessary to select a certain sequence of the nodes and links required to be passed, then piecewise K-optimal path calculation is performed according to the sequence, and finally, the piecewise paths are spliced one by one. Such a piecewise path calculation method has the following defects.
1) Since the K-optimal path algorithm requires an extremely large calculation count, when there is no constraints for the sequence of the nodes and links required to be passed, the calculation count is also required to be multiplied by (n-1)!, which makes it impossible to complete the path calculation in reasonable time.
2) Since a total cost value for the finally spliced path is related to a calculation sequence of K-optimal paths, when there is no constraint for the sequence of the nodes and links required to be passed, it cannot be ensured that an optimal low-cost path is always calculated at first.
3) For non-directional links required to be passed, special processing is required, for example, continuous links required to be passed are bundled into one node, to ensure that a non-directional path required to be passed can be calculated correctly. However, the algorithm is quite complicated and difficult to design and maintain.
4) In some cases, only one condition in a set of nodes or links is required to be passed, namely one of multiple constraints is required to be passed. However, the present piecewise path calculation algorithm cannot meet this requirement.

Document US 2012/093030 A1 discloses a cross layer path provisioning method and system in multi-layer transport network. US2003/043756A1 refers to a centralized system and method for calculating a deadlock-free set of paths. The system generates an ordered set of deadlock-free sub- topologies, referred to as "layers."

### Summary

In view of the above defects, the embodiments of the present disclosure provide a routing path calculation method, system and device, and a computer-readable storage medium, which may solve at least one of the problems that optimal k-optimal path calculation under the condition of no sequence between passing constraints cannot be implemented through an existing piecewise path calculation algorithm in reasonable time, that special processing is required for non-directional links required to be passed to make the algorithm complicated and difficult to design and maintain, and that path calculation under a constrained type that only one of multiple constraints is required to be met cannot be implemented.

The following technical solutions are adopted in the present disclosure to solve the technical problems.

According to an aspect of the present disclosure, a routing path calculation method is provided, which may include: determining the number n of passing constraint condition or conditions, and correspondingly copying n network topology layer or layers, wherein n is a positive integer, wherein the passing constraint condition indicates that one or more links or nodes are required to be passed; configuring different layer attribute information for an original network topology layer and the n copied network topology layer or layers; modifying connection of at least one link of each network topology layer according to the n passing constraint condition or conditions, and establishing connection of at least one one-way link between two network topology layers with adjacent layer attribute information; calculating a k-optimal path from a starting point of a head network topology layer to an ending point of an end network topology layer by use of a k-optimal path algorithm; and performing restoration processing on the layer attribute information of at least one node in the k-optimal path to convert the at least one node into a node in the original network topology layer to obtain a final path; wherein before determining the number n of the passing constraint condition or conditions and correspondingly copying the n network topology layer or layers, further comprising: detecting whether the passing constraint condition or conditions are valid or not; and in a case where the passing constraint condition or conditions are valid, executing the operation of determining the number n of the passing constraint condition or conditions.

According to another not claimed aspect of the present disclosure, a routing path calculation system is provided, which may include: a topology layer copying unit, configured to determine the number n of passing constraint condition or conditions and correspondingly copy n network topology layer or layers, wherein n is a positive integer; a layer attribute setting unit, configured to configure different layer attribute information for an original network topology layer and the n copied network topology layer or layers; a link topology modification unit, configured to modify connection of at least one link of each network topology layer according to the n passing constraint condition or conditions and establish connection of at least one one-way link between two network topology layers with adjacent layer attribute information; a k-optimal path calculation unit, configured to calculate a k-optimal path between a starting point of a head network topology layer to an ending point of an end network topology layer by use of a k-optimal path algorithm; and a layer attribute restoration unit, configured to perform restoration processing on the layer attribute information of at least one node in the k-optimal path to obtain a final path.

According to another aspect of the the present disclosure, a routing path calculation device is provided, which may include a memory, a processor and a computer program stored in the memory and capable of running in the processor, wherein the computer program may be executed by the processor to implement the operations of the routing path calculation method.

According to another aspect of the present disclosure, a computer-readable storage medium is provided, in which a computer program may be stored, wherein the computer program may be executed by a processor to execute the operations of the routing path calculation method.

### Brief Description of the Drawings

In order to describe the technical solutions in the embodiments of the present disclosure more clearly, the drawings referred to when describing the embodiments or a related art will be simply introduced below. It is apparent that the drawings described below are related to only some embodiments of the present disclosure. Those of ordinary skill in the art may further obtain other drawings according to these drawings without creative work.
Fig. 1 is an implementation flowchart of a routing path calculation method according to the present disclosure;
Fig. 2 is a topological diagram of an original network topology layer according to a preferred implementation example of the present disclosure;
Fig. 3 is a schematic diagram of modifying a network topology under a single-node constraint according to a preferred implementation example of the present disclosure;
Fig. 4 is a schematic diagram of modifying a network topology under a single-link constraint according to a preferred implementation example of the present disclosure;
Fig. 5 is a schematic diagram of modifying a network topology under an "or"-type constraint in which only one of multiple conditions needs to be met according to a preferred implementation example of the present disclosure;
Fig. 6 is a schematic diagram of modifying a network topology under an "and"-type constraint in which multiple conditions need to be simultaneously met according to a preferred implementation example of the present disclosure;
Fig. 7 is an example diagram of a path calculation result obtained under multiple condition constraints according to a preferred implementation example of the present disclosure;
Fig. 8 is an implementation flowchart of a routing path calculation method according to embodiment 2 of the present disclosure;
Fig. 9 is a structure diagram of a routing path calculation system according to embodiment 3 of the present disclosure; and
Fig. 10 is a structure diagram of a routing path calculation device according to embodiment 4 of the present disclosure.

### Detailed Description of the Embodiments

For making the technical problems to be solved, the technical solutions and beneficial effects in the present disclosure clearer, the present disclosure will further be described below in combination with the drawings and embodiments in detail. It should be understood that the specific embodiments described herein are adopted not to limit the present disclosure but only to explain the present disclosure.

### Embodiment 1

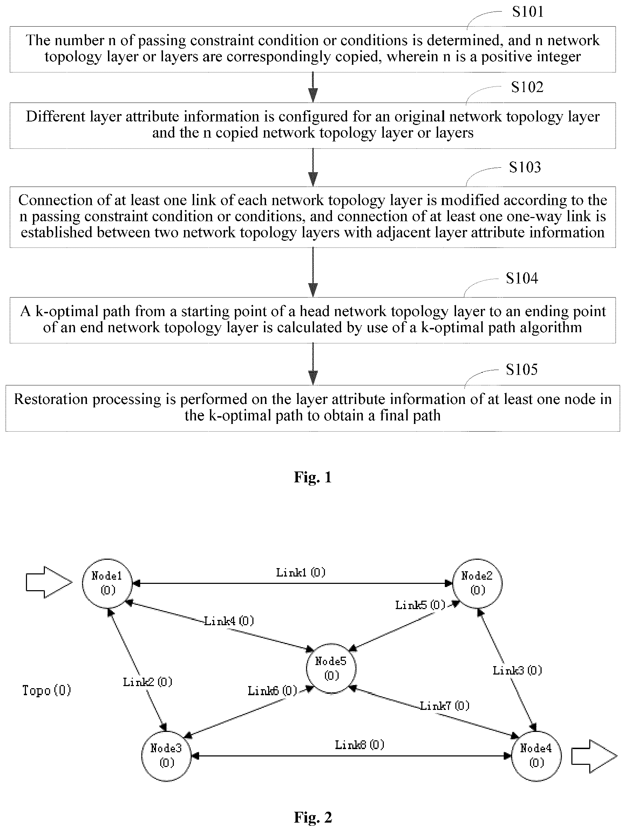

Fig. 1 is an implementation flowchart of a routing path calculation method according to embodiment 1 of the present disclosure. An execution subject of the method is a routing path calculation system/device in the embodiments of the present disclosure. As shown in Fig. 1, the routing path calculation method provided in the embodiment may include the following operations.

In S101, the number n of passing constraint condition or conditions is determined, and n network topology layer or layers are correspondingly copied, wherein n is a positive integer.

There may be one or multiple passing constraint conditions of a routing path, wherein multiple refers to two or more than two. Correspondingly copying the n network topology layer or layers refers to correspondingly copying the n network topology layer or layers according to the original network topology layer of a routing device.

In S 102, different layer attribute information is configured for an original network topology layer and the n copied network topology layer or layers.

Configuring the different layer attribute information for each network topology layer refers to assigning different layer numbers to the network topology layers. For example, in a specific implementation example, the original network topology layer is numbered to be 0, the first copied network topology layer is numbered to be 1, the second copied network topology layer is numbered to be 2, and by parity of reasoning, the nth copied network topology layer is numbered to be n. Correspondingly, "n" is also marked after each node Identifier (ID) and each link ID in each network topology layer to represent that they belong to the nth network topology layer.

In S103, connection of at least one link of each network topology layer is modified according to the n passing constraint condition or conditions, and connection of at least one one-way link is established between two network topology layers with adjacent layer attribute information.

In an exemplary implementation of the embodiment, when the n passing constraint condition or conditions indicate that one node is required to be passed, n is equal to 1, and one network topology layer is correspondingly copied. The operation S103 may be implemented in the following manner. The connection of a one-way link between the node required to be passed in the original network topology layer and the node required to be passed in the copied network topology layer is established, and cost of the one-way link is set to be 0.

For example, if a network topology of the original network topology layer is shown in Fig. 2 and the passing constraint condition indicates that Node5 is required to be passed, a copy, recorded as a network topology layer Topo(1), of the original network topology layer Topo(0) is made, and all nodes and links in the network topology layer Topo(1) have a layer attribute "1".

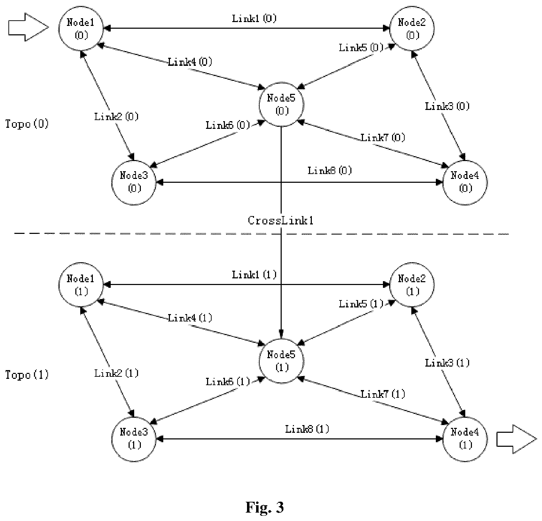

Node5(0) (i.e., Node5 in the layer Topo(0)) is connected with Node5(1) (i.e., Node5 in the layer Topo(1)) through a one-way link CrossLink1, and cost of the one-way link is set to be 0. In such a manner, a modified network topology can be obtained, specifically as shown in Fig. 3.

Subsequently, in S104, K-optimal path calculation is performed by taking Node1(0) as a head node and taking Node4(1) as an end node to obtain all K-optimal paths required to pass Node5.

Finally, in S 105, node IDs with a layer attribute "1" in a path calculation result are restored, and the nodes Node5(0) and Node5(1) are combined to obtain a final path.

In an exemplary implementation of the embodiment, when the n passing constraint condition or conditions indicate that one link required to be passed is required to be passed, n is equal to 1, and one network topology layer is correspondingly copied. The operation S103 may be implemented in the following manner. Connection of a one-way link between a first node of the link required to be passed in the original network topology layer and a second node of the link required to be passed in the copied network topology layer is established, and cost of the one-way link is set to be cost of a link in a direction from the first node to the second node in the same network topology layer. Connection of a one-way link between a second node of the link required to be passed in the original network topology layer and a first node of the link required to be passed in the copied network topology layer is established, and cost of the one-way link is set to be cost of a link in a direction from the second node to the first node in the same network topology layer. The link required to be passed in the original network topology layer and the link required to be passed in the copied network topology layer are deleted.

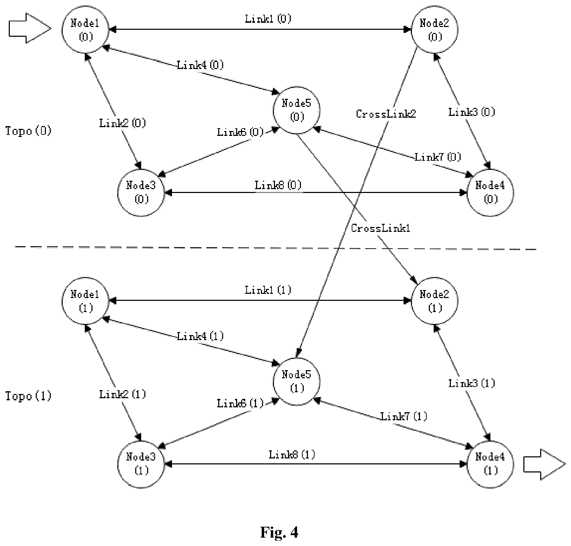

For example, as shown in Fig. 4, if the passing constraint condition indicates that Link5 is required to be passed, a copy, recorded as Topo(1), of the original network topology layer is made, and all nodes and links in the Topo(1) have the layer attribute "1".

Node5(0) is connected with Node2(1) through a one-way link CrossLink1, and cost of the one-way link is cost of a link in a direction from Node5 to Node2 of Link5. Node2(0) is connected with Node5(1) through a one-way link CrossLink2, and cost of the one-way link is cost of a link in a direction from Node2 to Node5 of Link5. Link5(0) and Link5(1) are deleted. In such a manner, a modified network topology can be obtained.

Subsequently, in S104, K-optimal path calculation is performed by taking Node1(0) as a head node and taking Node4(1) as an end node to obtain all K-optimal paths required to pass Link5.

Finally, in S105, node IDs with the layer attribute "1" in a path calculation result are restored to obtain a final path.

In an exemplary implementation of the embodiment, when the n passing constraint condition or conditions indicate that any one link in multiple links is required to be passed, n is equal to 1, and one network topology layer is correspondingly copied. The operation S103 may be implemented in the following manner. That is, the connection of the link of each network topology layer is modified according to the n passing constraint condition or conditions and the connection of the one-way link is established between the two network topology layers with the adjacent layer attribute information may be implemented in the following manner. Connection of a one-way link between a first node of each link required to be passed in the original network topology layer and a second node of the link required to be passed in the copied network topology layer is established, and cost of the one-way link is set to be cost of a link in a direction from the first node to the second node in the same network topology layer. Connection of a one-way link between a second node of each link required to be passed in the original network topology layer and a first node of the link required to be passed in the copied network topology layer is established, and cost of the one-way link is set to be cost of a link in a direction from the second node to the first node in the same network topology layer. Each link required to be passed in the original network topology layer and each link required to be passed in the copied network topology layer are deleted.

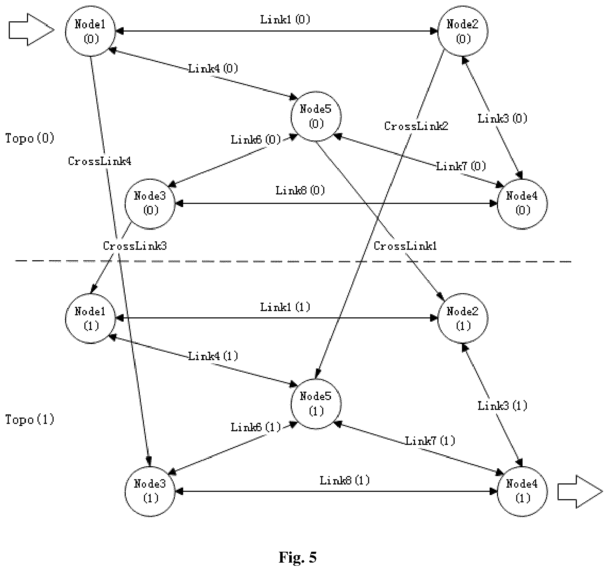

For example, as shown in Fig. 5, if the passing constraint condition indicates that Link2 or Link5 is required to be passed, a copy, recorded as Topo(1), of the network topology layer is made, and all nodes and links in the Topo(1) have the layer attribute "1".

Node5(0) is connected with Node2(1) through a one-way link CrossLink1, and cost of the one-way link is cost of a link in a direction from Node5 to Node2 of Link5. Node2(0) is connected with Node5(1) through a one-way link CrossLink2, and cost of the one-way link is cost of a link in a direction from Node2 to Node5 of Link5. Link5(0) and Link5(1) are deleted.

Node3(0) is connected with Nodel(1) through a one-way link CrossLink3, and cost of the one-way link is cost of a link in a direction from Node3 to Node1 of Link2. Node1(0) is connected with Node3(1) through a one-way link CrossLink4, and cost of the one-way link is cost of a link in a direction from Node1 to Node3 of Link2. Link2(0) and Link2(1) are deleted.

Subsequently, in S104, K-optimal path calculation is performed by taking Node1(0) as a head node and taking Node4(1) as an end node to obtain all K-optimal paths required to pass Link2 or Link5.

Finally, in S105, node IDs with the layer attribute "1" in a path calculation result are restored to obtain a final path.

In an exemplary implementation of the embodiment, when the n passing constraint condition or conditions indicate that one or more nodes are required to be passed and one or more links are required to be passed, n is equal to a sum of the number of the one or more nodes required to be passed and the number of the one or more links required to be passed. The operation S103 may be implemented in the following manner. That is, the operation that the connection of the link of each network topology layer is modified according to the n passing constraint condition or conditions and the connection of the one-way link is established between the two network topology layers with the adjacent layer attribute information may be implemented in the following manner. Connection of one-way links are established between the adjacent network topology layers according to the one or more nodes required to be passed respectively, wherein connection of one one-way link is correspondingly established between each group of adjacent network topology layers for each node required to be passed. Connection of corresponding one-way links are established between the adjacent network topology layers according to the one or more links required to be passed respectively, wherein two one-way links are correspondingly established between each group of adjacent network topology layers for each link required to be passed. The one or more links required to be passed in the original network topology layer and the one or more links required to be passed in each copied network topology layer are deleted.

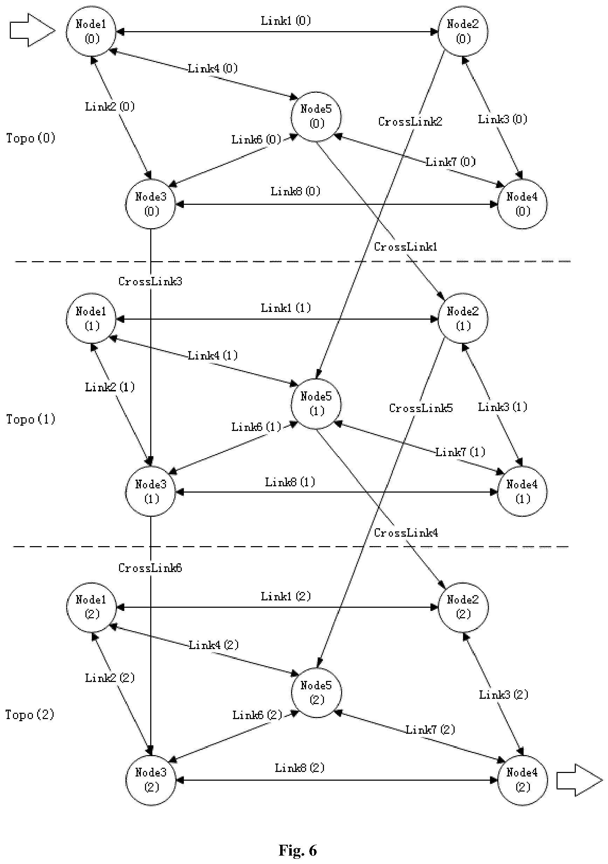

For example, as shown in Fig. 6, if the passing constraint condition indicates that Node3 is required to be passed and Link5 is required to be passed, two copies, recorded as Topo(1) and Topo(2) respectively, of the original network topology layer are made, and all nodes and links in the Topo(1) and Topo(2) have the layer attributes "1" and "2".

Node5(0) is connected with Node2(1) through a one-way link CrossLink1, and cost of the one-way link is cost of a link in a direction from Node5 to Node2 of Link5. Node2(0) is connected with Node5(1) through a one-way link CrossLink2, and cost of the one-way link is cost of a link in a direction from Node2 to Node5 of Link5. Link5(0) and Link5(1) are deleted.

Node3(0) is connected with Node3(1) through a one-way link CrossLink3, and cost of the one-way link is set to be 0.

Node5(1) is connected with Node2(2) through a one-way link CrossLink4, and cost of the one-way link is cost of a link in a direction from Node5 to Node2 of Link5. Node2(1) is connected with Node5(2) through a one-way link CrossLink5, and cost of the one-way link is cost of a link in a direction from Node2 to Node5 of Link5. Link5(2) is deleted.

Node3(1) is connected with Node3(2) through a one-way link CrossLink6, and cost of the one-way link is set to be 0.

Subsequently, in S104, K-optimal path calculation is performed by taking Node1(0) as a head node and taking Node4(2) as an end node to obtain all K-optimal paths required to pass Node3 and Link5.

Finally, in S105, node IDs with the layer attribute "1" or "2" in a path calculation result are restored to obtain a final path.

In S104, a k-optimal path from a starting point of the head network topology layer to an ending point of the end network topology layer is calculated by use of a k-optimal path algorithm.

In the embodiment, the k-optimal path algorithm adopts a K-Shortest Paths (KSP) algorithm. The head network topology layer refers to the network topology layer Topo(0), and the end network topology layer refers to the network topology layer Topo(n).

In S 105, restoration processing is performed on the layer attribute information of at least one node in the k-optimal path to obtain a final path.

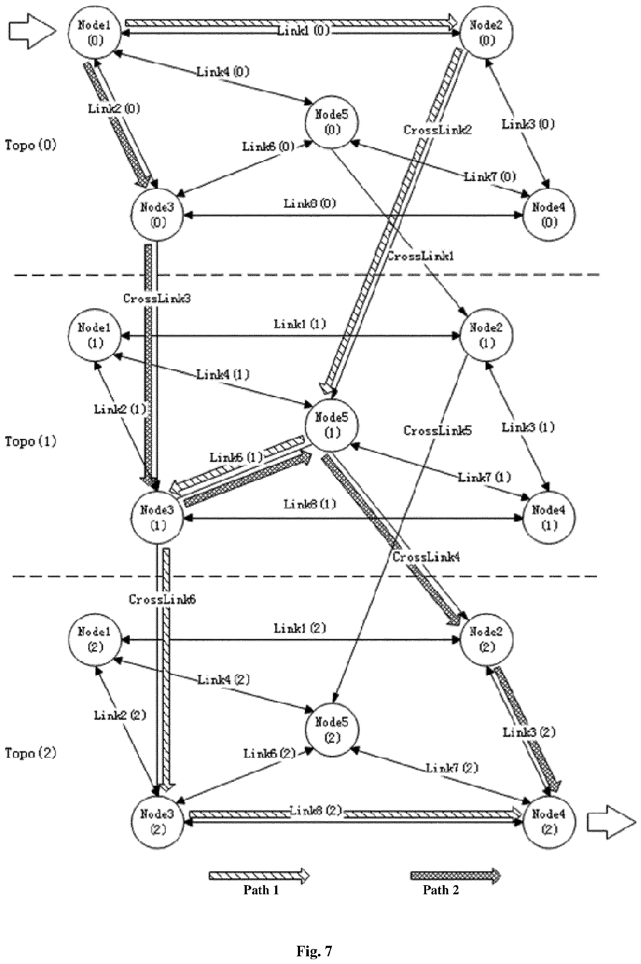

The operation that restoration processing is performed on the layer attribute information of the node in the k-optimal path may be implemented in the following manner. The layer attribute information of each node ID in the k-optimal path is restored to obtain a final k-optimal path. For example, as shown in Fig. 6, if the passing constraint conditions indicate that Node3 is required to be passed and Link5 is required to be passed, two paths in a path calculation result are shown in Fig. 7. The first path passes Node1(0)→Node2(0)→Node5(1)→Node3(1)→Node3(2)→Node4(2), and a path obtained by the restoration processing is Node1→Node2→Node5→Node3→Node4. The second path passes Node1(0)→Node3(0)→Node3(1)→Node5(1)→Node2(2)→Node4(2), and a path obtained by the restoration processing is Node1→Node3→Node5→Node2→Node4.

It can be seen from the above that, according to the routing path calculation method provided in the embodiment, first, the original network topology layer is copied according to the passing constraint condition or conditions and different layer attributes are configured for the network topology layers; then, the connection of the link of each network topology layer is modified according to the passing constraint condition or conditions, and at least one corresponding one-way link is added between different network topology layers; and finally, the k-optimal path of the modified network topology is calculated by use of the k-optimal path algorithm, and restoration processing is performed on the layer attribute of at least one node in the k-optimal path to convert the node into a node in the original network topology layer to obtain the final path. Therefore, optimal k-optimal path calculation under the condition of no sequence between passing constraints can be implemented, and no special processing is required for non-directional links required to be passed, so that the complexity of the algorithm is reduced. Moreover, path calculation under a constrained type that only one of multiple constraints is required to be met can be implemented.

### Embodiment 2

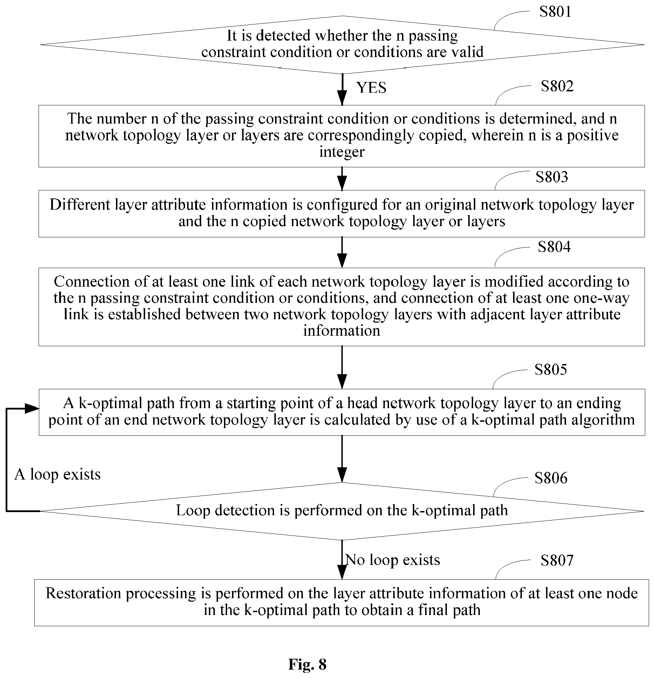

Fig. 8 is an implementation flowchart of a routing path calculation method according to embodiment 2 of the present disclosure. An execution subject of the method is a routing path calculation system/device in the embodiments of the present disclosure. As shown in Fig. 8, the routing path calculation method provided in the embodiment may include the following operations.

In S801, it is detected whether the passing constraint condition or conditions are valid or not, and in a case where the passing constraint condition or conditions are valid, proceed to S802.

The operation of detecting whether the passing constraint condition or conditions are valid or not may be implemented in the following manner. It is detected whether an original network topology layer for routing includes the node or nodes required to be passed and/or the link or links required to be passed in the passing constraint condition or conditions or not. In a case where the original network topology layer for routing includes the node or nodes required to be passed and/or the link or links required to be passed in the passing constraint condition or conditions, it is determined that the passing constraint condition or conditions are valid. In a case where the original network topology layer for routing does not include the node or nodes required to be passed and/or the link or links required to be passed in the passing constraint condition or conditions, it is determined that the passing constraint condition or conditions are invalid.

Optionally, in the embodiment, when it is detected that the passing constraint condition or conditions are invalid, a prompt is made to a user such that the user resets the passing constraint condition or conditions.

In S802, the number n of passing constraint condition or conditions is determined, and n network topology layer or layers are correspondingly copied, wherein n is a positive integer.

In S803, different layer attribute information is configured for an original network topology layer and the n copied network topology layer or layers.

In S804, connection of at least one link of each network topology layer is modified according to the n passing constraint condition or conditions, and connection of at least one one-way link is established between two network topology layers with adjacent layer attribute information.

In S805, a k-optimal path from a starting point of the head network topology layer to an ending point of the end network topology layer is calculated by use of a k-optimal path algorithm.

In S806, loop detection is performed on the k-optimal path; in a case where the k-optimal path includes a loop, S805 is re-executed to recalculate the k-optimal path; and in a case where the k-optimal path includes no loop, S807 is entered.

The operation that loop detection is performed on the k-optimal path specifically may be implemented in the following manner. It is judged whether the k-optimal path passes the same nodes in different layers or not. In a case where the k-optimal path passes the same nodes in the different layers, it is judged whether the same nodes in the different layers are adjacent in the k-optimal path or not. If the same nodes in the different layers are not adjacent, the k-optimal path is considered to include the loop; and if the same nodes in the different layers are adjacent or the k-optimal path does not pass the same nodes in the different layers, it is determined that the k-optimal path includes no loop.

In S807, restoration processing is performed on the layer attribute information of at least one node in the k-optimal path to obtain a final path.

It is to be noted that S802 to S805 and S807 in the embodiment are completely the same as S101 to S105 in the above embodiment respectively and thus will not be elaborated herein.

It can be seen from the above that, compared with the above embodiment, the embodiment has the advantages that the validation of the passing constraint condition or conditions is required to be detected at first before the number n of the passing constraint condition or conditions is determined and the subsequent flow is entered when the passing constraint condition or all the passing constraint conditions are valid, so that smooth path calculation may be ensured. Before restoration processing is performed on the layer attribute of the node in the k-optimal path, loop detection is performed on the k-optimal path, the k-optimal path is recalculated when the loop is detected. When it is confirmed that there is no loop, restoration processing is performed on the layer attribute of the node in the k-optimal path to obtain the final path, so that the reliability of the final path may be ensured.

### Embodiment 3

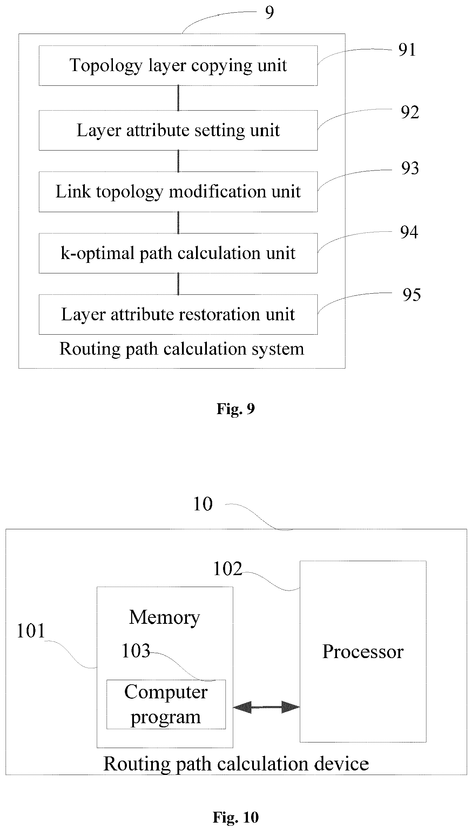

Fig. 9 is a structure diagram of a routing path calculation system according to embodiment 3 of the present disclosure. For convenient description, only parts related to the embodiment are shown.

As shown in Fig. 9, the routing path calculation system 9 provided in the embodiment includes: a topology layer copying unit 91, configured to determine the number n of passing constraint condition or conditions and correspondingly copy n network topology layer or layers, wherein n is a positive integer; a layer attribute setting unit 92, configured to configure different layer attribute information for an original network topology layer and the n copied network topology layer or layers; a link topology modification unit 93, configured to modify connection of at least one link of each network topology layer according to the n passing constraint condition or conditions and establish connection of at least one one-way link between two network topology layers with adjacent layer attribute information; a k-optimal path calculation unit 94, configured to calculate a k-optimal path between a starting point of the head network topology layer to an ending point of the end network topology layer by use of a k-optimal path algorithm; and a layer attribute restoration unit 95, configured to perform restoration processing on the layer attribute information of at least one node in the k-optimal path to obtain a final path.

It is to be noted that, since each unit in the system provided in the embodiment of the present disclosure is based on the same concept as the method embodiment of the present disclosure, the technical effects achieved by the units are the same as those in the method embodiment of the present disclosure. Specific contents may refer to the descriptions in the method embodiment of the present disclosure and will not be elaborated herein.

It can be understood by those of ordinary skill in the art that all or some operations in the method disclosed in the embodiments may be implemented into software, firmware, hardware and proper combinations thereof.

### Embodiment 4

Fig. 10 is a structure diagram of a routing path calculation device according to embodiment 4 of the present disclosure. For convenient description, only parts related to the embodiment are shown.

As shown in Fig. 10, the routing path calculation device 10 provided in the embodiment of the present disclosure includes a memory 101, a processor 102 and a computer program 103 stored in the memory 102 and capable of running in the processor. The computer program 103 is executed by the processor 102 to implement the operations of the routing path calculation method of embodiment 1 or embodiment 2. Most typically, the device is a router.

The device of the embodiment of the present disclosure belongs to the same concept as the routing path calculation method of embodiment 1 or embodiment 2, and details about a specific implementation process thereof refer to the method embodiment. Technical features in the method embodiment are correspondingly applied to the device embodiment and will not be elaborated herein.

It can be understood by those of ordinary skill in the art that all or some operations in the method disclosed in the embodiments may be implemented into software, firmware, hardware and proper combinations thereof.

### Embodiment 5

Embodiment 5 of the present disclosure provides a computer-readable storage medium, in which a computer program is stored. The computer program is executed by a processor to execute the operations of the routing path calculation method of embodiment 1 or embodiment 2.

The computer-readable storage medium of the embodiment of the present disclosure belongs to the same concept as the routing path calculation method of embodiment 1 or embodiment 2, and details about a specific implementation process thereof refer to the corresponding method embodiment. Technical features in the method embodiment are correspondingly applied to the embodiment and will not be elaborated herein.

It can be understood by those of ordinary skill in the art that all or some operations in the method disclosed in the embodiments may be implemented into software, firmware, hardware and proper combinations thereof.

In a hardware implementation mode, division of the functional modules/units mentioned in the above descriptions does not always correspond to division of physical components. For example, a physical component may have multiple functions, or a function or operation may be cooperatively executed by a plurality of physical components. Some physical components or all physical components may be implemented into software executed by a processor such as a central processing unit, a digital signal processor or a microprocessor, or implemented into hardware, or implemented into integrated circuits such as application specific integrated circuits. Such software may be distributed in a computer-readable medium, and the computer-readable medium may include a computer storage medium (or a non-transitory medium) and a communication medium (or a temporary medium). As known to those of ordinary skill in the art, term computer storage medium includes volatile, nonvolatile, removable and irremovable media implemented in any method or technology for storing information (for example, computer-readable instructions, data structures, program modules or other data). The computer storage medium includes, but not limited to, a Random Access Memory (RAM), a Read-Only Memory (ROM), an Electrically Erasable Programmable ROM (EEPROM), a flash memory or another memory technology, a Compact Disc Read-Only Memory (CD-ROM), a Digital Video Disk (DVD) or another optical disk, a cassette, a magnetic tape, a disk memory or another magnetic storage device, or any other medium that may be configured to store expected information and may be accessed by a computer. In addition, it is known to those of ordinary skill in the art that a communication medium usually includes a computer-readable instruction, a data structure, a program module or other data in modulated data signals of, for example, a carrier or another transmission mechanism, and may include any information delivery medium.

The preferred embodiments of the present disclosure are described above with reference to the drawings and not thus intended to limit the scope of protection of the present disclosure.

## Claims

1. A routing path calculation method, comprising:
determining (S101, S802) the number n of passing constraint condition or conditions, and correspondingly copying (S101, S802) n network topology layer or layers, wherein n is a positive integer, wherein the passing constraint condition indicates that one or more links or nodes are required to be passed;
configuring (S102, S803) different layer attribute information for an original network topology layer and the n copied network topology layer or layers;
modifying (S103, S804) connection of at least one link of each network topology layer according to the n passing constraint condition or conditions, and establishing (S103, S804) connection of at least one one-way link between two network topology layers with adjacent layer attribute information;
calculating (S104, S805) a k-optimal path from a starting point of a head network topology layer to an ending point of an end network topology layer by use of a k-optimal path algorithm; and
performing (S105, S807) restoration processing on the layer attribute information of at least one node in the k-optimal path to convert the at least one node into a node in the original network topology layer to obtain a final path;
wherein before determining (S101, S802) the number n of the passing constraint condition or conditions and correspondingly copying the n network topology layer or layers, further comprising:
detecting (S801) whether the passing constraint condition or conditions are valid or not; and
in a case where the passing constraint condition or conditions are valid, executing the operation of determining (S101, S802) the number n of the passing constraint condition or conditions.

2. The routing path calculation method according to claim 1, wherein when the n passing constraint condition or conditions indicate that one node is required to be passed, n is equal to 1, and one network topology layer is correspondingly copied; and
modifying (S103, S804) the connection of the link of each network topology layer according to the n passing constraint condition or conditions and establishing (S103, S804) the connection of the one-way link between the two network topology layers with the adjacent layer attribute information comprises:
establishing the connection of a one-way link between the node required to be passed in the original network topology layer and the node required to be passed in the copied network topology layer, and setting cost of the one-way link to be 0.

3. The routing path calculation method according to claim 1, wherein when the n passing constraint condition or conditions indicate that one link is required to be passed, n is equal to 1, and one network topology layer is correspondingly copied;
modifying (S103, S804) the connection of the link of each network topology layer according to the n passing constraint condition or conditions and establishing (S103, S804) the connection of the one-way link between the two network topology layers with the adjacent layer attribute information comprises:
establishing connection of a one-way link between a first node of the link required to be passed in the original network topology layer and a second node of the link required to be passed in the copied network topology layer, and setting cost of the one-way link to be cost of a link in a direction from the first node to the second node in the same network topology layer;
establishing connection of a one-way link between a second node of the link required to be passed in the original network topology layer and a first node of the link required to be passed in the copied network topology layer, and setting cost of the one-way link to be cost of a link in a direction from the second node to the first node in the same network topology layer; and
deleting the link required to be passed in the original network topology layer and the link required to be passed in the copied network topology layer.

4. The routing path calculation method according to claim 1, wherein when the n passing constraint condition or conditions indicate that any one link in multiple links is required to be passed, n is equal to 1, and one network topology layer is correspondingly copied;
modifying (S103, S804) the connection of the link of each network topology layer according to the n passing constraint condition or conditions and establishing (S103, S804) the connection of the one-way link between the two network topology layers with the adjacent layer attribute information comprises:
establishing connection of a one-way link between a first node of each link required to be passed in the original network topology layer and a second node of the link required to be passed in the copied network topology layer, and setting cost of the one-way link to be cost of a link in a direction from the first node to the second node in the same network topology layer;
establishing connection of a one-way link between a second node of each link required to be passed in the original network topology layer and a first node of the link required to be passed in the copied network topology layer, and setting cost of the one-way link to be cost of a link in a direction from the second node to the first node in the same network topology layer; and
deleting each link required to be passed in the original network topology layer and each link required to be passed in the copied network topology layer.

5. The routing path calculation method according to claim 1, wherein when the n passing constraint condition or conditions indicate that one or more nodes are required to be passed and one or more links are required to be passed, n is the sum of the number of the one or more nodes required to be passed and the number of the one or more links required to be passed;
modifying (S103, S804) the connection of the link of each network topology layer according to the n passing constraint condition or conditions and establishing (S103, S804) the connection of the one-way link between the two network topology layers with the adjacent layer attribute information comprises:
establishing connection of one-way links between the adjacent network topology layers according to the one or more nodes required to be passed respectively, wherein connection of one one-way link is correspondingly established between each group of adjacent network topology layers for each node required to be passed;
establishing connection of corresponding one-way links between the adjacent network topology layers according to the one or more links required to be passed respectively, wherein two one-way links are correspondingly established between each group of adjacent network topology layers for each link required to be passed; and
deleting the one or more links required to be passed in the original network topology layer and the one or more links required to be passed in each copied network topology layer.

6. The routing path calculation method according to claim 1, after calculating (S104, S805) the k-optimal path from the starting point of the head network topology layer to the ending point of the end network topology layer by use of the k-optimal path algorithm, further comprising:
performing (S806) loop detection on the k-optimal path;
in a case where the k-optimal path comprises a loop, recalculating the k-optimal path; and
in a case where the k-optimal path does not comprise any loop, executing the operation of performing (S105, S807) the restoration processing on the layer attribute information of the at least one node in the k-optimal path to obtain the final path.

7. The routing path calculation method according to claim 6, wherein performing (S806) the loop detection on the k-optimal path comprises:
judging whether the k-optimal path passes the same nodes in different network topology layers or not;
in a case where the k-optimal path passes the same nodes in the different network topology layers, judging whether the same nodes in the different network topology layers are adjacent in the k-optimal path or not;
in a case where the same nodes in the different network topology layers are not adjacent, determining that the k-optimal path comprises the loop; and
in a case where the same nodes in the different network topology layers are adjacent or the k-optimal path does not pass the same nodes in the different network topology layers, determining that the k-optimal path does not comprise any loop.

8. The routing path calculation method according to claim 1, wherein detecting (S801) whether the passing constraint condition or conditions are valid or not comprises:
detecting whether the original network topology layer comprises a node or nodes required to be passed and/or a link or links required to be passed in the passing constraint condition or conditions or not;
in a case where the original network topology layer comprises the node or nodes required to be passed and/or the link or links required to be passed in the passing constraint condition or conditions, determining that the passing constraint condition or conditions are valid;
in a case where the original network topology layer does not comprise the node or nodes required to be passed and/or the link or links required to be passed in the passing constraint condition or conditions, determining that the passing constraint condition or conditions are invalid.

9. The routing path calculation method according to claim 1, wherein correspondingly copying (S101, S802) the n network topology layer or layers comprises:
correspondingly copying the n network topology layer or layers according to the original network topology layer of a routing device.

10. The routing path calculation method according to claim 1, wherein configuring (S102, S803) different layer attribute information for the original network topology layer and the n copied network topology layer or layers comprises:
assigning different layer numbers to the original network topology layer and the n copied network topology layer or layers.

11. The routing path calculation method according to claim 10, wherein the head network topology layer refers to the network topology layer with the smallest layer number while the end network topology layer refers to the network topology layer with the largest layer number.

12. The routing path calculation method according to claim 10, wherein configuring (S102, S803) different layer attribute information for the original network topology layer and the n copied network topology layer or layers further comprises:
marking the assigned layer number after Identifier, ID, of each node and each link in each network topology layer to represent that the node and the link belong to the network topology layer assigned with the layer number.

13. A routing path calculation device (10), comprising a memory (103), a processor (102) and a computer program (101) stored in the memory (103) and capable of running in the processor (102), wherein the computer program (101) is executed by the processor (102) to implement the operations of the routing path calculation method according to any one of claims 1-12.

14. A computer-readable storage medium, in which a computer program is stored, wherein the computer program is executed by a processor to implement the operations of the routing path calculation method according to any one of claims 1-12.

## Patentansprüche

1. Verfahren zur Berechnung eines Routing-Pfades, umfassend:
Bestimmen (S101, S802) der Anzahl n der Weiterleitungsbeschränkungsbedingung oder -bedingungen und entsprechendes Kopieren (S101, S802) von n Netzwerktopologieebene oder -ebenen, wobei n eine positive ganze Zahl ist, wobei die Weiterleitungsbeschränkungsbedingung anzeigt, dass eine oder mehrere Verknüpfungen oder Knoten weitergeleitet werden müssen;
Konfigurieren (S102, S803) unterschiedlicher Ebenenattributinformationen für eine ursprüngliche Netzwerktopologieebene und die n kopierten Netzwerktopologieebenen oder - ebenen;
Modifizieren (S103, S804) einer Verbindung von mindestens einer Verknüpfung jeder Netzwerktopologieebene gemäß der n Weiterleitungsbeschränkungsbedingung oder - bedingungen, und Herstellen (S103, S804) einer Verbindung von mindestens einer Einwegverknüpfung zwischen zwei Netzwerktopologieebenen mit Attributinformationen benachbarter Ebenen;
Berechnen (S104, S805) eines k-optimalen Pfades von einem Startpunkt einer Hauptnetzwerktopologieebene zu einem Endpunkt einer Endnetzwerktopologieebene unter Verwendung eines Algorithmus für den k-optimalen Pfad; und
Durchführen (S105, S807) einer Wiederherstellungsverarbeitung der Ebenenattributinformationen von mindestens einem Knoten in dem k-optimalen Pfad, um den mindestens einen Knoten in einen Knoten in der ursprünglichen Netzwerktopologieebene zu konvertieren, um einen endgültigen Pfad zu erhalten;
wobei es vor dem Bestimmen (S101, S802) der Anzahl n der Weiterleitungsbeschränkungsbedingung oder -bedingungen und dem entsprechenden Kopieren der n Netzwerktopologieebene oder -ebenen ferner umfasst:
Erkennen (S801), ob die Weiterleitungsbeschränkungsbedingung oder -bedingungen gültig sind oder nicht; und
in einem Fall, in dem die Weiterleitungsbeschränkungsbedingung oder -bedingungen gültig sind, Ausführen der Vorgangs des Bestimmens (S101, S802) der Anzahl n der Weiterleitungsbeschränkungsbedingung oder -bedingungen.

2. Verfahren zur Berechnung eines Routing-Pfades nach Anspruch 1, wobei, wenn die n Weiterleitungsbeschränkungsbedingung oder -bedingungen anzeigen, dass ein Knoten weitergeleitet werden muss, n gleich 1 ist und eine Netzwerktopologieebene entsprechend kopiert wird; und
Modifizieren (S103, S804) der Verbindung der Verknüpfung jeder Netzwerktopologieebene gemäß der n Weiterleitungsbeschränkungsbedingung oder - bedingungen und Herstellen (S103, S804) der Verbindung der Einwegverknüpfung zwischen den beiden Netzwerktopologieebenen mit den Attributinformationen benachbarter Ebenen umfassend:
Herstellen der Verbindung einer Einwegverknüpfung zwischen dem Knoten, der in der ursprünglichen Netzwerktopologieebene weitergeleitet werden muss, und dem Knoten, der in der kopierten Netzwerktopologieebene weitergeleitet werden muss, und Setzen der Kosten der Einwegverknüpfung auf 0.

3. Verfahren zur Berechnung eines Routing-Pfades nach Anspruch 1, wobei, wenn die n Weiterleitungsbeschränkungsbedingung oder -bedingungen anzeigen, dass eine Verknüpfung weitergeleitet werden muss, n gleich 1 ist und eine Netzwerktopologieebene entsprechend kopiert wird;
Modifizieren (S103, S804) der Verbindung der Verknüpfung jeder Netzwerktopologieebene gemäß der n Weiterleitungsbeschränkungsbedingung oder - bedingungen und Herstellen (S103, S804) der Verbindung der Einwegverknüpfung zwischen den beiden Netzwerktopologieebenen mit den Attributinformationen benachbarter Ebenen umfassend:
Herstellen einer Verbindung einer Einwegverknüpfung zwischen einem ersten Knoten der Verknüpfung, die in der ursprünglichen Netzwerktopologieebene weitergeleitet werden muss, und einem zweiten Knoten der Verknüpfung, die in der kopierten Netzwerktopologieebene weitergeleitet werden muss, und Setzen der Kosten der Einwegverknüpfung auf die Kosten einer Verknüpfung in einer Richtung von dem ersten Knoten zu dem zweiten Knoten in derselben Netzwerktopologieebene;
Herstellen einer Verbindung einer Einwegverknüpfung zwischen einem zweiten Knoten der Verknüpfung, die in der ursprünglichen Netzwerktopologieebene weitergeleitet werden muss, und einem ersten Knoten der Verknüpfung, die in der kopierten Netzwerktopologieebene weitergeleitet werden muss, und Setzen der Kosten der Einwegverknüpfung auf die Kosten einer Verknüpfung in einer Richtung von dem zweiten Knoten zu dem ersten Knoten in derselben Netzwerktopologieebene; und
Löschen der Verknüpfung, die in der ursprünglichen Netzwerktopologieebene weitergeleitet werden muss, und der Verknüpfung, die in der kopierten Netzwerktopologieebene weitergeleitet werden muss.

4. Verfahren zur Berechnung eines Routing-Pfades nach Anspruch 1, wobei, wenn die n Weiterleitungsbeschränkungsbedingung oder -bedingungen anzeigen, dass irgendeine Verknüpfung in mehreren Verknüpfungen weitergeleitet werden muss, n gleich 1 ist und eine Netzwerktopologieebene entsprechend kopiert wird;
Modifizieren (S103, S804) der Verbindung der Verknüpfung jeder Netzwerktopologieebene gemäß der n Weiterleitungsbeschränkungsbedingung oder - bedingungen und Herstellen (S103, S804) der Verbindung der Einwegverknüpfung zwischen den beiden Netzwerktopologieebenen mit den Attributinformationen benachbarter Ebenen umfassend:
Herstellen einer Verbindung einer Einwegverknüpfung zwischen einem ersten Knoten jeder Verknüpfung, die in der ursprünglichen Netzwerktopologieebene weitergeleitet werden muss, und einem zweiten Knoten der Verknüpfung, die in der kopierten Netzwerktopologieebene weitergeleitet werden muss, und Setzen der Kosten der Einwegverknüpfung auf die Kosten einer Verknüpfung in einer Richtung von dem ersten Knoten zu dem zweiten Knoten in derselben Netzwerktopologieebene;
Herstellen einer Verbindung einer Einwegverknüpfung zwischen einem zweiten Knoten jeder Verknüpfung, die in der ursprünglichen Netzwerktopologieebene weitergeleitet werden muss, und einem ersten Knoten der Verknüpfung, die in der kopierten Netzwerktopologieebene weitergeleitet werden muss, und Setzen der Kosten der Einwegverknüpfung auf die Kosten einer Verknüpfung in einer Richtung von dem zweiten Knoten zu dem ersten Knoten in derselben Netzwerktopologieebene; und
Löschen jeder Verknüpfung, die in der ursprünglichen Netzwerktopologieebene weitergeleitet werden muss, und jeder Verknüpfung, die in der kopierten Netzwerktopologieebene weitergeleitet werden muss.

5. Verfahren zur Berechnung eines Routing-Pfades nach Anspruch 1, wobei, wenn die Weiterleitungsbeschränkungsbedingung oder -bedingungen anzeigen, dass ein oder mehrere Knoten weitergeleitet werden müssen und eine oder mehrere Verknüpfungen weitergeleitet werden müssen, n die Summe der Anzahl des einen oder der mehreren Knoten, die weitergeleitet werden müssen, und der Anzahl der einen oder der mehreren Verknüpfungen, die weitergeleitet werden müssen, ist;
Modifizieren (S103, S804) der Verbindung der Verknüpfung jeder Netzwerktopologieebene gemäß der n Weiterleitungsbeschränkungsbedingung oder - bedingungen und Herstellen (S103, S804) der Verbindung der Einwegverknüpfung zwischen den beiden Netzwerktopologieebenen mit den Attributinformationen benachbarter Ebenen umfassend:
Herstellen einer Verbindung von Einwegverknüpfungen zwischen den benachbarten Netzwerktopologieebenen entsprechend dem einen oder den mehreren jeweils weiterzuleitenden Knoten, wobei die Verbindung einer Einwegverknüpfung entsprechend zwischen jeder Gruppe von benachbarten Netzwerktopologieebenen für jeden weiterzuleitenden Knoten hergestellt wird;
Herstellen einer Verbindung von entsprechenden Einwegverknüpfungen zwischen den benachbarten Netzwerktopologieebenen entsprechend der einen oder mehreren jeweils weiterzuleitenden Verknüpfungen, wobei zwei Einwegverknüpfungen entsprechend zwischen jeder Gruppe von benachbarten Netzwerktopologieebenen für jede weiterzuleitende Verknüpfung hergestellt werden; und
Löschen der einen oder mehreren Verknüpfungen, die in der ursprünglichen Netzwerktopologieebene weitergeleitet werden müssen, und der einen oder mehreren Verknüpfungen, die in jeder kopierten Netzwerktopologieebene weitergeleitet werden müssen.

6. Verfahren zur Berechnung eines Routing-Pfades nach Anspruch 1, wobei nach dem Berechnen (S104, S805) des k-optimalen Pfades vom Startpunkt der Hauptnetzwerktopologieebene zum Endpunkt der Netzwerktopologieebene unter Verwendung des Algorithmus für den k-optimalen Pfad ferner Folgendes umfasst:
Durchführen (S806) einer Schleifenerkennung auf dem k-optimalen Pfad;
in einem Fall, in dem der k-optimale Pfad eine Schleife umfasst, Neuberechnen des k-optimalen Pfades; und
in einem Fall, in dem der k-optimale Pfad keine Schleife umfasst, Ausführen des Vorgangs des Durchführens (S105, S807) der Wiederherstellungsverarbeitung der Ebenenattributinformationen des mindestens einen Knotens in dem k-optimalen Pfad, um den endgültigen Pfad zu erhalten.

7. Verfahren zur Berechnung eines Routing-Pfades nach Anspruch 6, wobei das Durchführen (S806) der Schleifenerkennung auf dem k-optimalen Pfad umfasst:
Beurteilen, ob der k-optimale Pfad dieselben Knoten in verschiedenen Netzwerktopologieebenen weiterleitet oder nicht;
in einem Fall, in dem der k-optimale Pfad die gleichen Knoten in den verschiedenen Netzwerktopologieebenen weiterleitet, Beurteilen, ob die gleichen Knoten in den verschiedenen Netzwerktopologieebenen in dem k-optimalen Pfad benachbart sind oder nicht;
in einem Fall, in dem die gleichen Knoten in den verschiedenen Netzwerktopologieebenen nicht benachbart sind, Bestimmen, dass der k-optimale Pfad die Schleife umfasst; und
in einem Fall, in dem die gleichen Knoten in den verschiedenen Netzwerktopologieebenen benachbart sind oder der k-optimale Pfad nicht an den gleichen Knoten in den verschiedenen Netzwerktopologieebenen weiterleitet, Bestimmen, dass der k-optimale Pfad keine Schleife umfasst.

8. Verfahren zur Berechnung eines Routing-Pfades nach Anspruch 1, wobei das Erkennen (S801), ob die Weiterleitungsbeschränkungsbedingung oder -bedingungen gültig sind oder nicht, umfasst:
Erkennen, ob die ursprüngliche Netzwerktopologieebene einen oder mehrere weiterzuleitende Knoten und/oder eine oder mehrere weiterzuleitende Verknüpfungen in der/den Weiterleitungsbeschränkungsbedingung oder -bedingungen umfasst oder nicht;
in einem Fall, in dem die ursprüngliche Netzwerktopologieebene den oder die weiterzuleitenden Knoten und/oder die weiterzuleitenden Verknüpfung oder Verknüpfungen in der/den Weiterleitungsbeschränkungsbedingung oder -bedingungen umfasst, Bestimmen, dass die Weiterleitungsbeschränkungsbedingung oder -bedingungen gültig sind;
in einem Fall, in dem die ursprüngliche Netzwerktopologieebene den oder die weiterzuleitenden Knoten und/oder die weiterzuleitenden Verknüpfung oder Verknüpfungen nicht in der/den Weiterleitungsbeschränkungsbedingung oder -bedingungen umfasst, Bestimmen, dass die Weiterleitungsbeschränkungsbedingung oder -bedingungen ungültig sind.

9. Verfahren zur Berechnung eines Routing-Pfades nach Anspruch 1, wobei das entsprechende Kopieren (S101, S802) der n Netzwerktopologieebene oder -ebenen Folgendes umfasst:
entsprechendes Kopieren der n Netzwerktopologieebene oder -ebenen entsprechend der ursprünglichen Netzwerktopologieebene einer Routingvorrichtung.

10. Verfahren zur Berechnung eines Routing-Pfades nach Anspruch 1, wobei das Konfigurieren (S102, S803) unterschiedlicher Ebenenattributinformationen für die ursprüngliche Netzwerktopologieebene und die n kopierten Netzwerktopologieebene oder - ebenen Folgendes umfasst:
Zuweisen unterschiedlicher Ebenennummern zu der ursprünglichen Netzwerktopologieebene und der/den n kopierten Netzwerktopologieebene oder -ebenen.

11. Verfahren zur Berechnung eines Routing-Pfades nach Anspruch 10, wobei sich die Hauptnetzwerktopologieebene auf die Netzwerktopologieebene mit der kleinsten Ebenennummer bezieht, während sich die Endnetzwerktopologieebene auf die Netzwerktopologieebene mit der größten Ebenennummer bezieht.

12. Verfahren zur Berechnung eines Routing-Pfades nach Anspruch 10, wobei das Konfigurieren (S102, S803) unterschiedlicher Ebenenattributinformationen für die ursprüngliche Netzwerktopologieebene und die n kopierten Netzwerktopologieebene oder - ebenen ferner Folgendes umfasst:
Markieren der zugewiesenen Ebenennummer nach Identifikator, ID, jedes Knotens und jeder Verknüpfung in jeder Netzwerktopologieebene, um darzustellen, dass der Knoten und die Verknüpfung zu der mit der Ebenennummer zugewiesenen Netzwerktopologieebene gehören.

13. Vorrichtung (10) zur Berechnung eines Routing-Pfades, umfassend einen Speicher (103), einen Prozessor (102) und ein Computerprogramm (101), das in dem Speicher (103) gespeichert ist und in dem Prozessor (102) ablaufen kann, wobei das Computerprogramm (101) von dem Prozessor (102) ausgeführt wird, um die Verfahren zur Berechnung eines Routing-Pfades nach einem der Ansprüche 1-12 zu implementieren.

14. Computerlesbares Speichermedium, in dem ein Computerprogramm gespeichert ist, wobei das Computerprogramm von einem Prozessor ausgeführt wird, um die Operationen des Verfahrens zur Berechnung eines Routing-Pfades nach einem der Ansprüche 1-12 zu implementieren.

## Revendications

1. Procédé de calcul de chemin de routage comprenant :
la détermination (S101, S802) du nombre n de conditions de contrainte de passage, et la copie en conséquence (S101, S802) de n couche(s) de topologie de réseau, dans lequel n est un nombre entier positif, dans lequel la condition de contrainte de passage indique qu'une ou plusieurs liaisons ou qu'un ou plusieurs noeuds doivent être passés ;
la configuration (S102, S803) de différentes informations d'attribut de couche pour une couche de topologie de réseau d'origine et la ou les n couches de topologie de réseau copiées ;
la modification (S103, S804) de la connexion d'au moins une liaison de chaque couche de topologie de réseau selon la ou les n conditions de contrainte de passage, et l'établissement (S103, S804) de la connexion d'au moins une liaison unidirectionnelle entre deux couches de topologie de réseau avec des informations d'attribut de couche adjacente ;
le calcul (S104, S805) d'un chemin k-optimal, d'un point de départ d'une couche de topologie de réseau de tête jusqu'à un point final d'une couche de topologie de réseau d'extrémité à l'aide d'un algorithme de chemin k-optimal ; et
la réalisation (S105, S807) d'un traitement de restauration sur les informations d'attribut de couche d'au moins un noeud dans le chemin k-optimal pour convertir le ou les noeuds en un noeud dans la couche de topologie de réseau d'origine pour obtenir un chemin final ;
dans lequel, avant de déterminer (5101, S802) le nombre n de la ou des conditions de contrainte de passage et de copier en conséquence la ou les n couches de topologie de réseau, comprenant en outre :
la détection (S801) pour savoir si la ou les conditions de contrainte de passage sont valides ou non ; et
dans le cas où la ou les conditions de contrainte de passage sont valides, l'exécution de l'opération de détermination (S101, S802) du nombre n de la ou des conditions de contrainte de passage.

2. Procédé de calcul de chemin de routage selon la revendication 1, dans lequel, lorsque la ou les n conditions de contrainte de passage indiquent qu'un noeud doit être passé, n est égal à 1, et une couche de topologie de réseau est copiée en conséquence ; et
la modification (S103, S804) de la connexion de la liaison de chaque couche de topologie de réseau selon la ou les n conditions de contrainte de passage et l'établissement (S103, S804) de la connexion de la liaison unidirectionnelle entre les deux couches de topologie de réseau avec les informations d'attribut de couche adjacente comprend :
l'établissement de la connexion d'une liaison unidirectionnelle entre le noeud devant être passé dans la couche de topologie de réseau d'origine et le noeud devant être passé dans la couche de topologie de réseau copiée, et la définition du coût de la liaison unidirectionnelle à 0.

3. Procédé de calcul de chemin de routage selon la revendication 1, dans lequel, lorsque la ou les n conditions de contrainte de passage indiquent qu'une liaison doit être passée, n est égal à 1, et une couche de topologie de réseau est copiée en conséquence ;
la modification (S103, S804) de la connexion de la liaison de chaque couche de topologie de réseau selon la ou les n conditions de contrainte de passage et l'établissement (S103, S804) de la connexion de la liaison unidirectionnelle entre les deux couches de topologie de réseau avec les informations d'attribut de couche adjacente comprend :
l'établissement d'une connexion d'une liaison unidirectionnelle entre un premier noeud de la liaison devant être passé dans la couche de topologie de réseau d'origine et un second noeud de la liaison devant être passé dans la couche de topologie de réseau copiée, et la définition du coût de la liaison unidirectionnelle pour qu'il devienne le coût d'une liaison dans une direction allant du premier noeud au second noeud dans la même couche de topologie de réseau ;
l'établissement d'une connexion d'une liaison unidirectionnelle entre un second noeud de la liaison devant être passé dans la couche de topologie de réseau d'origine et un premier noeud de la liaison devant être passé dans la couche de topologie de réseau copiée, et la définition du coût de la liaison unidirectionnelle pour qu'il devienne le coût d'une liaison dans une direction allant du second noeud au premier noeud dans la même couche de topologie de réseau ; et
la suppression de la liaison devant être passée dans la couche de topologie de réseau d'origine et de la liaison devant être passée dans la couche de topologie de réseau copiée.

4. Procédé de calcul de chemin de routage selon la revendication 1, dans lequel, lorsque la ou les n conditions de contrainte de passage indiquent qu'une liaison quelconque parmi plusieurs liaisons doit être passée, n est égal à 1, et une couche de topologie de réseau est copiée en conséquence ;
la modification (S103, S804) de la connexion de la liaison de chaque couche de topologie de réseau selon la ou les n conditions de contrainte de passage et l'établissement (S103, S804) de la connexion de la liaison unidirectionnelle entre les deux couches de topologie de réseau avec les informations d'attribut de couche adjacente comprend :
l'établissement d'une connexion d'une liaison unidirectionnelle entre un premier noeud de chaque liaison devant être passé dans la couche de topologie de réseau d'origine et un second noeud de la liaison devant être passé dans la couche de topologie de réseau copiée, et la définition du coût de la liaison unidirectionnelle pour qu'il devienne le coût d'une liaison dans une direction allant du premier noeud au second noeud dans la même couche de topologie de réseau ;
l'établissement d'une connexion d'une liaison unidirectionnelle entre un second noeud de chaque liaison devant être passé dans la couche de topologie de réseau d'origine et un premier noeud de la liaison devant être passé dans la couche de topologie de réseau copiée, et la définition du coût de la liaison unidirectionnelle pour qu'il devienne le coût d'une liaison dans une direction allant du second noeud au premier noeud dans la même couche de topologie de réseau ; et
la suppression de chaque liaison devant être passée dans la couche de topologie de réseau d'origine et de chaque liaison devant être passée dans la couche de topologie de réseau copiée.

5. Procédé de calcul de chemin de routage selon la revendication 1, dans lequel, lorsque la ou les n conditions de contrainte de passage indiquent qu'un ou plusieurs noeuds doivent être passés et qu'une ou plusieurs liaisons doivent être passées, n est la somme du nombre du ou des noeuds devant être passés et du nombre de la ou des liaisons devant être passées ;
la modification (S103, S804) de la connexion de la liaison de chaque couche de topologie de réseau selon la ou les n conditions de contrainte de passage et l'établissement (S103, S804) de la connexion de la liaison unidirectionnelle entre les deux couches de topologie de réseau avec les informations d'attribut de couche adjacente comprend :
l'établissement d'une connexion de liaisons unidirectionnelles entre les couches de topologie de réseau adjacentes selon le ou les noeuds devant être passés respectivement, dans lequel la connexion d'une liaison unidirectionnelle est établie de manière correspondante entre chaque groupe de couches de topologie de réseau adjacentes pour chaque noeud devant être passé ;
l'établissement d'une connexion de liaisons unidirectionnelles correspondantes entre les couches de topologie de réseau adjacentes selon la ou les liaisons devant être passées respectivement, dans lequel deux liaisons unidirectionnelles sont établies de manière correspondante entre chaque groupe de couches de topologie de réseau adjacentes pour chaque liaison devant être passée ; et
la suppression de la ou des liaisons devant être passées dans la couche de topologie de réseau d'origine et de la ou des liaisons devant être passées dans chaque couche de topologie de réseau copiée.

6. Procédé de calcul de chemin de routage selon la revendication 1, après avoir calculé (S 104, S805) le chemin k-optimal depuis le point de départ de la couche de topologie de réseau de tête jusqu' au point final de la couche de topologie de réseau d'extrémité en utilisant l'algorithme de chemin k-optimal, comprenant en outre :
la réalisation (S806) d'une détection de boucle sur le chemin k-optimal ;
dans le cas où le chemin k-optimal comprend une boucle, le recalcul du chemin k-optimal ; et
dans le cas où le chemin k-optimal ne comprend aucune boucle, l'exécution de l'opération consistant à réaliser (S105, S807) le traitement de restauration sur les informations d'attribut de couche du ou des noeuds dans le chemin k-optimal pour obtenir le chemin final.

7. Procédé de calcul de chemin de routage selon la revendication 6, dans lequel la réalisation (S806) de la détection de boucle sur le chemin k-optimal comprend :
l'évaluation pour savoir si le chemin k-optimal passe ou non par les mêmes noeuds dans différentes couches de topologie de réseau ;
dans le cas où le chemin k-optimal passe par les mêmes noeuds dans les différentes couches de topologie de réseau, l'évaluation pour savoir si les mêmes noeuds dans les différentes couches de topologie de réseau sont adjacents dans le chemin k-optimal ou non ;
dans le cas où les mêmes noeuds dans les différentes couches de topologie de réseau ne sont pas adjacents, la détermination du fait que le chemin k-optimal comprend la boucle ; et
dans le cas où les mêmes noeuds dans les différentes couches de topologie de réseau sont adjacents ou si le chemin k-optimal ne passe pas par les mêmes noeuds dans les différentes couches de topologie de réseau, la détermination du fait que le chemin k-optimal ne comprend aucune boucle.

8. Procédé de calcul de chemin de routage selon la revendication 1, dans lequel la détection (S801) pour savoir si la ou les conditions de contrainte de passage sont valides ou non comprend :
la détection pour savoir si la couche de topologie de réseau d'origine comprend un ou plusieurs noeuds devant être passés et/ou une ou plusieurs liaisons devant être passées dans la ou les conditions de contrainte de passage ou non ;
dans le cas où la couche de topologie de réseau d'origine comprend le ou les noeuds devant être passés et/ou la ou les liaisons devant être passées dans la ou les conditions de contrainte de passage, la détermination du fait que la ou les conditions de contrainte de passage sont valides ;
dans le cas où la couche de topologie de réseau d'origine ne comprend pas le ou les noeuds devant être passés et/ou la ou les liaisons devant être passées dans la ou les conditions de contrainte de passage, la détermination du fait que la ou les conditions de contrainte de passage sont non valides.

9. Procédé de calcul de chemin de routage selon la revendication 1, dans lequel la copie en conséquence (S101, S802) de la ou des n couches de topologie de réseau comprend :
la copie de manière correspondante de la ou des n couches de topologie de réseau selon la couche de topologie de réseau d'origine d'un dispositif de routage.

10. Procédé de calcul de chemin de routage selon la revendication 1, dans lequel la configuration (S102, S803) de différentes informations d'attribut de couche pour la couche de topologie de réseau d'origine et la ou les n couches de topologie de réseau copiées comprend :
l'attribution de différents nombres de couches à la couche de topologie de réseau d'origine et à la ou aux n couches de topologie de réseau copiées.

11. Procédé de calcul de chemin de routage selon la revendication 10, dans lequel la couche de topologie de réseau de tête fait référence à la couche de topologie de réseau ayant le plus petit nombre de couches tandis que la couche de topologie de réseau d'extrémité fait référence à la couche de topologie de réseau ayant le plus grand nombre de couches.

12. Procédé de calcul de chemin de routage selon la revendication 10, dans lequel la configuration (S102, S803) de différentes informations d'attribut de couche pour la couche de topologie de réseau d'origine et la ou les n couches de topologie de réseau copiées comprend en outre :
le marquage du nombre de couches attribué après l'identifiant, ID, de chaque noeud et de chaque liaison dans chaque couche de topologie de réseau pour représenter le fait que le noeud et la liaison appartiennent à la couche de topologie de réseau à laquelle est attribué le nombre de couches.

13. Dispositif de calcul de chemin de routage (10), comprenant une mémoire (103), un processeur (102) et un programme informatique (101) stocké dans la mémoire (103) et capable de s'exécuter dans le processeur (102), dans lequel le programme informatique (101) est exécuté par le processeur (102) pour mettre en oeuvre les opérations du procédé de calcul de chemin de routage selon l'une quelconque des revendications 1 à 12.

14. Support de stockage lisible par ordinateur, dans lequel un programme informatique est stocké, dans lequel le programme informatique est exécuté par un processeur pour mettre en oeuvre les opérations du procédé de calcul de chemin de routage selon l'une quelconque des revendications 1 à 12.
